(19) Europäisches Patentamt
European Patent Office
Office européen des brevets

(11) **EP 2 323 213 A1**

(12) **EUROPEAN PATENT APPLICATION**

(43) Date of publication:
**18.05.2011 Bulletin 2011/20**

(51) Int Cl.:
*H01M 10/22* (2006.01)  *H01M 10/26* (2006.01)
*H01M 4/42* (2006.01)  *H01M 4/56* (2006.01)

(21) Application number: **10168071.8**

(22) Date of filing: **01.07.2010**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**
Designated Extension States:
**BA ME RS**

(30) Priority: **29.10.2009  US 608201**

(71) Applicant: **Stauffer, John E.
Greenwich, CT 06831 (US)**

(72) Inventor: **Stauffer, John E.
Greenwich, CT 06831 (US)**

(74) Representative: **Schaumburg, Thoenes, Thurn,
Landskron, Eckert
Patentanwälte
Postfach 86 07 48
81634 München (DE)**

(54) **Lead-zinc battery**

(57)     A rechargeable battery is provided such that the positive electrode comprises lead, the negative electrode zinc, and the electrolyte is an aqueous solution of an alkali metal sulphate. Upon discharge, lead dioxide is reduced to lead sulphate and zinc is oxidized to zinc oxide. The reactions are reversed when the battery is charged.

FIG. 1

EP 2 323 213 A1

## Description

RELATED APPLICATIONS

This application is a continuation-in-part of United States Application Serial No. 11/249,223 filed on October 13, 2005 currently pending, which in turn is a continuation of United States Application Serial No. 10/756,015 filed on January 13, 2004 and abandoned. In addition, this application is a continuation-in-part of U.S. Patent Application No. 11/167,535 filed on June 27, 2005 currently pending, which is a continuation-in-part of U.S. Patent Application No. 10/756,015 filed on January 13, 2004 and abandoned.

FIELD OF THE INVENTION

The present invention relates to a novel type of storage battery which is distinguished by its unique electrochemistry. The positive electrode comprises lead dioxide and the negative electrode zinc. The electrolyte consists of an aqueous solution of an alkali metal sulphate salt. Various buffering agents, including carbonates, borates, silicates, and phosphates, may be added to the electrolyte. Upon discharge the lead dioxide is reduced to a divalent lead compound and zinc is oxidized to zinc oxide.

BACKGROUND OF THE INVENTION

The most common storage battery, found in almost every vehicle, is the lead-acid battery. This battery comprises a lead dioxide positive electrode, a lead metal negative electrode, and sulphuric acid for the electrolyte. Its chief advantage is low cost. Nevertheless, it has limited energy density and the electrolyte is extremely corrosive. Furthermore, sufficient acid is required to react with the electrodes during discharge. Maintenance-free types avoid the loss of evolved gases, as disclosed in U.S. Patent No. 3,862,861, but their cycle-life is still restricted.

The search for alternatives to the lead-acid battery has been ongoing. As far back as 1934, Drumm disclosed the nickel oxide-zinc battery and the silver oxide-zinc battery. (U.S. Patent No. 1,955,115) Both of these batteries employ zinc as the negative electrode and caustic potash as the electrolyte. Nickel oxide or silver oxide serves as the positive electrode. These batteries have improved energy densities and for many uses are a good compromise.

The ideal storage battery would combine the best features of existing batteries with none of the drawbacks. The need for such a battery is apparent for backup power systems and in mobile applications. Therefore, it is an object of the present invention to provide an improved storage battery, one that is both economical and highly efficient. These and other objects, features, and advantages of the invention will be recognized from the following description and the accompanying figure.

SUMMARY OF THE DISCLOSURE

A storage battery is fabricated from a positive electrode of lead and a negative electrode of zinc. During charging, some lead is converted to lead dioxide. Upon discharge, lead dioxide is reduced to a divalent lead compound, more particularly, lead sulphate. Zinc is oxidized to zinc oxide. These reactions are reversible such that the battery fulfills both functions of a secondary battery: supplying electricity on demand and storing or accumulating surplus electricity.

The electrolyte of the cell is an aqueous solution of a salt selected from the group of alkali metal sulfates. The alkali metals include lithium, sodium, potassium, rubidium, and cesium. Any combination of these metals may be used.

Certain additives have been found to be effective buffers in the electrolyte. These additives include bicarbonates, carbonates, borates, silicates, and phosphates.

The electrodes of a practical embodiment of the invention may be configured as sheets, fibers, or particles, thereby to maximize the electrode surface area. Interspersed particles of a carbonaceous material may be used to improve the electrical conductivity. A gelling agent may be added to immobilize the electrolyte. As required, a separator may be employed between the positive and negative electrodes to prevent a short circuit.

BRIEF DESCRIPTION OF THE DRAWING

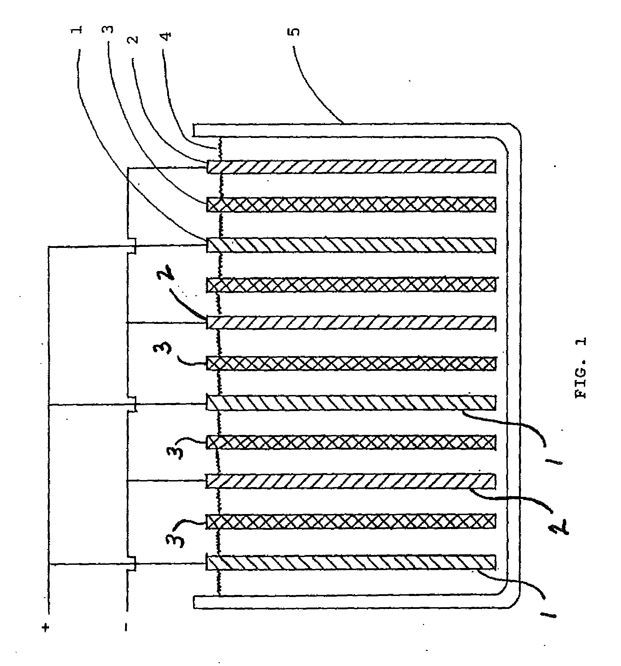

Fig. 1 is a rendering of a prototype of a lead-zinc battery according to the present invention, illustrating the principal components of the cell.

WRITTEN DESCRIPTION

The chemistry of the lead-zinc battery is important in order to gain an understanding of its operation. A positive electrode comprises lead dioxide, which is reduced to divalent lead sulphate during discharge. The negative electrode comprises zinc, which is oxidized to zinc oxide when the cell is discharged. The electrolyte is an aqueous solution of an alkali metal sulphate. In the special case where the alkali metal is potassium, the electrode reactions during discharge can be represented by the following equations.

Positive electrode:

$$(1) \quad PbO_2 + K_2SO_4 + 2\,H_2O + 2e \rightarrow PbSO_4 + KOH + 2\,OH$$

Negative electrode:

$$(2) \quad Zn + 2\,OH \rightarrow ZnO + H_2O + 2e$$

When these equations are combined, the overall reaction for the cell is obtained as follows:

$$(3) \quad PbO_2 + Zn + K_2SO_4 \rightarrow PbSO_4 + ZnO + 2\,KOH$$

During recharging of the cell, the reactions are reversed. Thus, lead sulphate is oxidized to lead dioxide and zinc oxide is reduced to zinc metal. The emf necessary for charging is supplied by an external power source. The discharge-recharge cycle can be repeated endlessly, thus fulfilling the function of a storage battery.

A particularly difficult challenge in designing new batteries is identifying electrode materials that will undergo electrochemical reactions and still withstand corrosion by the electrolyte. Although theory is helpful in this respect, empirical data are required to prove the effectiveness of materials—both for the electrodes and the electrolyte. One measure of the relative performance of a cell is the open-circuit voltage.

In its choice of electrolyte, the present invention has a decided advantage. Instead of using an electrolyte comprising a strong alkali like potassium hydroxide or a strong acid like sulphuric acid, the present invention employs an aqueous solution of a salt. Such an electrolyte is a good ionic conductor but is relatively mild under operating conditions. It therefore avoids problems of electrode corrosion that plague existing batteries.

Notwithstanding the superior performance of the electrolyte of the present invention, there may be a need for better control over the pH of the solution. In this case, a buffering agent may be added to the electrolyte. Such compounds as carbonates, borates,

The selection of the alkali metal sulphate for use in the electrolyte is of some interest. Sulfates of any one of the alkali metals can be used, including lithium, sodium, potassium, rubidium, and cesium. As one progresses from lithium to cesium in this series, the electronegativity decreases. This phenomenon will effect the ionic nature of the salts, and therefore can be expected to influence the battery's performance. The sulfate salt used as the electrolyte can also be tetramethylammonium sulfate.

Another factor in considering the choice of alkali metal is the solubility of its sulphate. For example, the solubility of potassium sulphate at 0° C. is 7.35 gm. Per 100 ml. water, whereas the solubility of lithium sulphate at the same temperature is 35.34 gm. Greater solubility has an advantage by aiding the compactness of the battery.

The configuration of a lead-zinc cell of the present invention is not restricted. The distinctive features, however, can be appreciated from a drawing of a prototype as shown in Fig. 1. The cut-away perspective shows the electrodes arranged as flat parallel plates. The lead positive electrodes 1 and the zinc negative electrodes 2 are kept apart by separators 3. These parts are immersed in the electrolyte 4, which is contained in casing 5. This sectional view also shows the electrical leads attached to the electrodes.

EXAMPLES

(1) A cell was fashioned from a glass jar 2.5 in, diameter by 4 in. high. A plastic divider kept the electrodes apart. The positive electrode was a strip of lead 1.5 in. wide by 4 in. high. The negative electrode was a strip of zinc 1.5 in. wide by 4 in. high. The electrolyte was prepared by dissolving 44.1 gm. Of sodium sulphate 99.0% minimum in 200 ml. of water. After charging he cell for 25 minutes at 3.0 volts, an open circuit potential of 2.75 volts was observed. The cell was discharged through a loop containing a flashlight bulb producing a current of 95 milliamps.

(2) The same cell as used in example (1) was employed. In this run, an electrolyte was formulated by dissolving 45.1 gm. lithium sulphate monohydrate 99.0% minimum in 200 ml. of water. An open circuit potential of 2.72 volts was obtained after charging

(3) The cell used in this experiment was assembled from a glass jar 1.75 in. diameter by 4 in. high with a plastic divider to keep the electrodes separated. The electrodes were identical to those used in examples 1 and 2. The electrolyte consisted of 15.6 gm. of cesium sulphate 99.9% dissolved in 100 ml. water. After charging the cell for 11 minutes at 3.2 volts, an open circuit potential of 2.55 volts was achieved. The maximum current produced by the cell was 80 milliamps through the same loop as before. At the end of all three runs described in examples 1, 2, and 3, the electrodes were in excellent condition, showing no signs of corrosion.

While the invention has been described in connection with certain embodiments, it is to be understood that the invention is not to be limited to the disclosed embodiments but, on the contrary, is intended to cover various modifications and equivalent arrangements included within the spirit and scope of the appended claims, which scope is to be accorded the broadest interpretation so as to encompass all such modifications and equivalent structures as is permitted under the law.

**Claims**

1. A storage battery comprising:

   a. a positive electrode of lead;
   b. a negative electrode of zinc; and
   c. an electrolyte comprising an aqueous solution of a salt selected from the group of alkali metal sulfates.

2. The storage battery according to claim 1 in which the alkali metal is lithium.

3. The storage battery according to claim 1 in which the alkali metal is sodium.

4. The storage battery according to claim 1 in which the alkali metal is potassium.

5. The storage battery according to claim 1 in which the alkali metal is rubidium.

6. The storage battery according to claim 1 in which the alkali metal is cesium.

7. The storage battery according to claim 1 in which the alkali metal is tetramethylammonium.

FIG. 1

**EUROPEAN SEARCH REPORT**

Application Number

EP 10 16 8071

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 2 572 854 A1 (CROSES RICHARD [FR]) 9 May 1986 (1986-05-09) * page 1, lines 22-27 * * page 2, lines 1-9 * ----- | 1,2,4-7 | INV. H01M10/22 H01M10/26 H01M4/42 H01M4/56 |
| X | GB 170 618 A (ADOLFO POUCHAIN) 27 October 1921 (1921-10-27) * page 1, lines 23-27,34-44 * ----- | 1-4 | |
| X | GB 1 527 237 A (LINDSTROEM AB OLLE) 4 October 1978 (1978-10-04) * page 2, lines 28-34,78-81,87-88 * * page 3, lines 22-26,42-44 * ----- | 1-4 | |
| X | US 3 964 927 A (VILLARREAL-DOMINGUEZ ENRIQUE) 22 June 1976 (1976-06-22) * column 3, lines 14-27,65-68 * ----- | 1,3 | |

TECHNICAL FIELDS
SEARCHED (IPC)

H01M

The present search report has been drawn up for all claims

| Place of search | Date of completion of the search | Examiner |
|---|---|---|
| Munich | 27 January 2011 | Veit, Claudia |

EPO FORM 1503 03.82 (P04C01)

EP 2 323 213 A1

**ANNEX TO THE EUROPEAN SEARCH REPORT
ON EUROPEAN PATENT APPLICATION NO.**

EP 10 16 8071

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2011

| Patent document cited in search report | | | Publication date | Patent family member(s) | | Publication date |
|---|---|---|---|---|---|---|
| FR 2572854 | A1 | | 09-05-1986 | NONE | | |
| GB 170618 | A | | 27-10-1921 | NONE | | |
| GB 1527237 | A | | 04-10-1978 | CA | 1055566 A1 | 29-05-1979 |
| | | | | DE | 2541239 A1 | 22-04-1976 |
| | | | | FR | 2286513 A1 | 23-04-1976 |
| | | | | JP | 1250604 C | 14-02-1985 |
| | | | | JP | 51060934 A | 27-05-1976 |
| | | | | JP | 59028028 B | 10-07-1984 |
| | | | | SE | 393895 B | 23-05-1977 |
| | | | | SE | 7412237 A | 29-03-1976 |
| US 3964927 | A | | 22-06-1976 | NONE | | |

For more details about this annex : see Official Journal of the European Patent Office, No. 12/82

7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11249223 B
- US 10756015 B
- US 16753505 A
- US 75601504 A
- US 3862861 A
- US 1955115 A